# EUROPÄISCHE PATENTSCHRIFT

(11) **EP 2 866 925 B1**
(45) Veröffentlichungstag und Bekanntmachung des Hinweises auf die Patenterteilung: **18.10.2023**
(21) Anmeldenummer: 13739955.6
(22) Anmeldetag: 02.07.2013
(51) Int. Cl.: B01F 29/10, B01F 35/33, B29B 7/10, B04B 5/02, B01F 35/30

(54) **VORRICHTUNG ZUR HOMOGENISIERUNG UND SEPARATION VON PROBEN**
APPARATUS FOR HOMOGENIZATION AND SEPARATION OF SAMPLES
DISPOSITIF DESTINÉ À HOMOGÉNÉISER ET SÉPARER DES ÉCHANTILLONS

(30) Priorität: 02.07.2012 DE 102012105819
(43) Veröffentlichungstag der Anmeldung: 06.05.2015
(73) Patentinhaber: Andreas Hettich GmbH & Co. KG, 78532 Tuttlingen (DE); Massing, Ulrich, 79249 Merzhausen (DE)
(72) Erfinder: EBERLE, Klaus-Günter, 78532 Tuttlingen (DE); LENZ, Anke, 88637 Leibertingen (DE); MASSING, Ulrich, 79249 Merzhausen (DE); ZIROLI, Vittorio, 79232 March (DE)
(74) Vertreter: Puschmann Borchert Kaiser Klettner Patentanwälte Partnerschaft mbB
(86) Internationale Anmeldenummer: PCT/EP2013/063963
(87) Internationale Veröffentlichungsnummer: WO 2014/006059

(56) Entgegenhaltungen:
- EP-A1- 2 457 645
- CA-A1- 2 546 251
- JP-A- 2008 018 431
- JP-A- 2009 119 587
- JP-A- 2010 274 171
- US-A- 1 011 929
- US-A1- 2008 192 564

## Beschreibung

Die Erfindung betrifft eine Vorrichtung zur dualen Zentrifugation von Proben.

Eine Duale Zentrifugation ist ein Prozess, bei dem eine Probe zum einen um eine Hauptdrehachse und gleichzeitig um eine zweite Nebendrehachse gedreht wird, wobei die Nebendrehachse die Probe in einer beliebigen Position schneiden kann und auch außerhalb der Probe liegen kann.

Eine Vorrichtung zur Dualen Zentrifugation umfasst daher neben einer Hauptdrehachse mindestens eine weitere Drehachse, eine Nebendrehachse, um die eine Probe gedreht werden kann. Üblicherweise wird eine Vorrichtung zur Aufnahme und Halterung einer Probe (Probenaufnahme) um die Nebendrehachse gedreht.

Prozesse, die mit Hilfe einer Vorrichtung zur Dualen Zentrifugation, d.h. dem Zusammenwirken von zwei Drehbewegungen, durchgeführt werden, werden als Duale Zentrifugationsprozesse (DZ-Prozesse) bezeichnet. Diese können gegenüber herkömmlichen Prozessen mit Hilfe der Vorrichtung zur Dualen Zentrifugation effizienter durchgeführt werden. Wichtige Beispiele sind: Homogenisation, Mischen, Gewebeaufschluss.

Die US 2002/0172091 A1 betrifft eine Duale asymmetrische Zentrifuge zur Herstellung von Lebensmitteln insbesondere gekennzeichnet durch genau einen Zentrifugenbehälter, der um eine Behälterachse drehbar ist und rotationssymmetrisch zu dieser ausgebildet ist. Der Behälter ist am entfernten Ende des rotierenden Rotorarms angebracht. Der Behälter ist über einen Schaft mit einem Antriebsmechanismus verbunden, der am vom Behälter entgegengesetzten Ende des Zentrifugenrotors angebracht ist. Die Geschwindigkeit der Behälterrotation ist dabei abhängig von der Zentrifugengeschwindigkeit und in einem unveränderlichen Verhältnis eingestellt.

Dies hat den Nachteil, dass Proben, deren Probeneigenschaften ein Verhältnis von Haupt- zu Rückdrehung erfordern, dem das in der Vorrichtung vorliegende Verhältnis nicht entspricht, nicht verarbeitet werden können. Ferner kann mit dieser Vorrichtung eine reine Zentrifugation nicht durchgeführt werden.

Eine weitere einfache Form der Dualen asymmetrischen Zentrifugation, die nur eine Nebendrehachse beinhaltet, ist in der US 2003/0214878 A1 behandelt.

Diese offenbart eine Vorrichtung zum Mischen von Fluiddispersionen, wobei ein Behälter um eine erste Achse drehbar gelagert ist, die gegenüber einer zweiten mit dem Behälter verbundene Drehachse, Nebendrehachse, geneigt ist. Die erste Drehachse ist durch einen Motor angetrieben. Die zweite Drehachse ist mit einem Rad verbunden, welches gegen eine feste Anlagefläche gedrückt wird. Durch Drehung des Rotorarms wird das mit dem Behälter und der Behälterachse verbundene Rad entlang der Anlagefläche, die sowohl gegenüber dem Rotorarm als auch gegenüber der Behälterachse feststeht, geführt. Dadurch erfolgt eine zusätzliche Drehung des Behälters um die Nebendrehachse, wodurch sich eine direkte Abhängigkeit der Behälterdrehzahl von der Motordrehzahl des Zentrifugenmotors ergibt.

US 5,352,037 offenbart eine duale symmetrische Zentrifuge, die Zentrifugenbehälter aufweist, welche an einem Zentrifugenrotor montiert sind. Die Zentrifugenbehälter sind rotationssymmetrisch ausgebildet und um ihre Rotationsachse (Nebendrehachse) drehbar am Rotorarm befestigt. Der Antrieb der Behälter erfolgt über ein mit dem Rotor gekoppeltes Getriebe. Das Übertragungsverhältnis ist somit fest eingestellt. Es ergibt sich eine direkte Abhängigkeit der Behälterdrehzahl von der Motordrehzahl des Zentrifugenmotors. Mit dieser Vorrichtung kann weder eine Homogenisierung noch eine reine Zentrifugierung durchgeführt werden, da mit dieser Vorrichtung die lange Zentrifugationsdauer mit hoher Drehzahl nicht realisierbar ist.

Die US 1,011,929 offenbart eine Vorrichtung zum Mischen und Separieren von Medien, wobei diese ebenfalls einen um einen Hauptrotor drehbaren Behälter aufweist. Die Behälter sind wiederrum um eine zum Hauptrotor unterschiedliche Drehachse gelagert, und über ein Getriebe mit dem Hauptrotor verbunden, wobei eine Separation nur durch Einbringen von siebartigen Strukturen in die Behälter möglich ist.

Nach dem Stand der Technik ist es möglich, die Mischung und Homogenisation von Probenmaterial mit einer Dualen Zentrifuge zu erreichen.

Mit den im Stand der Technik bekannten Vorrichtungen ist es jedoch nicht möglich eine Separation durch Zentrifugation von Proben durchzuführen. Eine Duale Zentrifuge nach dem Stand der Technik eignet sich nicht zur Verwendung als reine Zentrifuge, da sie weder die notwendige Dauer eines Zentrifugationsprozesses noch die auftretenden hohen Zentrifugalkräfte / Zentripetalkräfte unbeschadet überstehen kann.

Die DE 101 43 439 A1 offenbart eine duale asymmetrische Zentrifuge zur Mischung von Probenmaterial, bei welcher eine Nebendrehachse mittels eines Keilriemens angetrieben wird, ähnlich der US 2002/0172091 A1. Ferner kann nach dieser Druckschrift das Verhältnis von Haupt zu Nebendrehung abhängig vom Zentrifugiermaterial ohne große bauliche Veränderung angepasst werden. Dies erfolgt insbesondere über die Durchmesseranpassung von Antriebs- und Abtriebsrolle. Bei diesem Gerät ist die Achse, die die Abtriebsrolle mit einem Winkelgetriebe verbindet, mit einem Simmerring gegen Austritt des Schmiermittels abgedichtet. Dieses hat den Nachteil, dass bei längerer Benutzung des Gerätes diese Abdichtung undicht wird und durch die im Bereich der Dichtung vorherrschenden Zentrifugal/Beschleunigungskräfte Schmiermittel austritt. Dadurch kann zum einen ein Schaden am Getriebe auftreten, zum anderen wird der Zentrifugeninnenraum mit Schmiermittel kontaminiert. Das Problem tritt insbesondere bei Erwärmung/Erhitzung des Lagers auf, so dass bei diesem Gerät die Laufzeiten auf maximal 30 Minuten beschränkt sind.

Die JP 2009119587 A offenbart eine Mischvorrichtung, die einen Zetnrifugenmotor und einen Zentrifugenrotor umfasst, wobei am Rotor Behälter drehbar angeordnet sind, welche über eine mit an ihrem Umfang mit einer Verzahnung versehenen Rotationseinheit im Rotor gelagert werden. Der Antrieb für die Rückdrehung erfolgt über einen in einer Hohlwelle in einem Zentrifugenmotor geführten Welle eines Rotationseinheitsantriebs.

In der JP 2010 274 171 A ist eine Mischvorrichtung beschrieben, umfassend einen über einen Schaft angetriebenen Zentrifugenrotor, der wenigstens eine Rotationseinheit aufnimmt. Die Rotationseinheit ist drehbar um eine Rotationseinheits-Drehachse ausgebildet, die verschieden zur Achse des Zentrifugenrotors ist. Am oberen Ende des Schafts, der über den Zentrifugenrotor vorsteht, ist ein konischer Körper angeordnet, der als ein Übertragungselement dient und in eine an der Rotationseinheit angeordnete, von einer Stützwelle getragene Drehrolle eingreift, um die Rotationseinheit anzutreiben.

Die JP 2008 018 431 A1 zeigt eine Vorrichtung zur Zentrifugation, umfassend Rotationseinheiten, die über ein zentrales Antriebselement, das drehfest relativ zu einem Zentrifugenmotorgehäuse angeordnet ist, sowie einem zweiten einen Zentrifugenrotor durchsetzenden Schaft der Rotationseinheit angebrachten Antriebselement angetrieben werden.

In der EP 2 457 645 A1 ist eine Vorrichtung zur Separation von Medien beschrieben, die einen Zentrifugenrotor aufweist, der einen Rotorkorpus umfasst, welcher um eine Rotationsachse des Zentrifugenrotors drehbar ausgebildet ist. Im Rotorkorpus ist eine Rotationseinheit gelagert, die in einem Abstand beabstandet zur Rotationsachse angeordnet ist und sich mit der Drehung des Rotorkorpus um die Rotationsachse dreht. Aufgrund der Lagerung der Rotationseinheit im Rotorkorpus ist die Rotationseinheit relativ zum Rotorkorpus um eine Rotationseinheits-Drehachse drehbar, die verschieden zur Rotationsachse des Zentrifugenrotors ist. Die Rotationseinheit durchsetzt das Lager im Rotorkorpus und weist an der Unterseite eine Verzahnung auf, über welche die Rotationseinheit mittels eines Rotationseinheits-Antriebs antreibbar ist, der einen Zahnkranz aufweist. Der Zahnkranz ist drehfest mit einem den Zentrifugenrotor durchsetzenden Schaft verbunden. Die Vorrichtung ist in der Lage während des Betriebs die Temperatur eines Probenmaterials einzustellen.

Die CA 2 546 251 A1 beschreibt eine Mischvorrichtung, umfassend einen Zentrifugenrotor, der in einer von einem Gehäuse gebildeten Zentrifugierkammer angeordnet ist. Ein unteres Ende einer becherförmigen Rotationseinheit ist am Zentrifugenrotor gelagert. Eine Lauffläche am oberen Rand der Rotationseinheit stellt einen Kontakt zu einer kreisförmigen Lauffläche am oberen Innenumfang des Gehäuses her, und bewirkt zusammen mit dem Lager, dass die Rotationseinheit sich um eine verschieden zur Motorachse ausgebildete Rotationseinheits-Drehachse drehen kann.

Die US 2008 018 431 A1 zeigt eine Mischvorrichtung, die gattungsbildende Merkmale aufweist, umfassend einen um eine Hauptachse drehbar angetriebenen Zentrifugenrotor. Im Zentrifugenrotor sind Rotationseinheiten in nach unten abgeschlossenen Ausnehmungen gelagert. Die Rotationseinheiten sind drehbar um eine Rotationseinheits-Drehachse ausgebildet, die unterschiedlich zur Hauptachse ist. Ein Zentrifugenmotor treibt den Zentrifugenrotor über eine koaxial zur Hauptachse angeordnete zentrale Welle mittels eines Zahnriemenantriebs an. Die Welle weist an ihrem vertikal oberen Ende ein zentrales Ritzel auf, das in zwei Satellitenritzel eingreift, wobei jedes der Satellitenritzel eine Achse aufweist, die parallel zur Rotationseinheits-Drehachse der jeweiligen Rotationseinheit geneigt ist. Die Satellitenritzel greifen in eine umfangseitige Verzahnung der Rotationseinheit ein, um diese anzutreiben.

Es ist eine Aufgabe der Erfindung eine Vorrichtung zur Dualen Zentrifugation anzugeben, die neben der Homogenisierung auch zur Separation von Probenmaterial geeignet ist, und die in verbesserter Weise auf die Bedürfnisse des Probenmaterials abstimmbar ist.

Die Homogenisierung erfordert im Gegensatz zur bloßen Durchmischung deutlich höhere Kräfte, die auf das Probenmaterial aufgebracht werden müssen, damit eine Spaltung der Teilchen die für eine Homogenisierung insbesondere flüssiger Medien wie Emulsionen oder Dispersionen notwendig ist, gewährleistet werden kann. Um diese Kraft aufbringen zu können ist eine hohe Drehgeschwindigkeit des Zentrifugenrotors notwendig.

Diese Aufgabe wird durch die Merkmale des Anspruchs 1 gelöst.

Gemäß einem ersten Aspekt der Erfindung umfasst eine Vorrichtung zur Homogenisierung und Separation von Medien, in bekannter Weise eine Zentrifuge, die einen um eine Motorachse eines Zentrifugenmotors drehbaren Zentrifugenrotor mit einem Rotorkorpus aufweist, an welchem wenigstens eine Rotationseinheit derart anbringbar ist, dass diese um eine von der Motorachse unterschiedliche Rotationseinheits-Drehachse drehbar ist, wobei ein Rotationseinheits-Antrieb zur Erzeugung der Drehbewegung der Rotationseinheit vorgesehen ist.

Erfindungsgemäß ist die Rotationseinheit in einer nach unten abgeschlossenen Ausnehmung im Rotorkorpus gelagert. Zudem ist ein Lager zur Lagerung der Rotationseinheit vorgesehen, welches unterhalb der Position des Schwerpunkts des Zentrifugenbehälters während der Zentrifugation liegt.

Dadurch liegt ein potentieller Aufnahmebereich der Rotationseinheit im Wesentlichen außerhalb des Rotorkorpus, wodurch der Aufnahmebereich den, während der Drehung des Rotors entstehenden Luftströmen ausgesetzt ist. Auf diese Weise kann eine verbesserte Kühlung der im Aufnahmebereich angeordneten Proben erreicht werden.

Durch die nach unten geschlossene Ausnehmung verbleibt aus einem Lager austretendes Schmiermittel während der gesamten Zentrifugationsdauer in der Ausnehmung und steht so im Bereich des Lagers zur Verfügung. Die Lagerung befindet sich so während der gesamten Betriebszeit in einem geschmierten Zustand, wodurch ein "fressen" der Lagerung vermieden werden kann.

So kann durch die erfindungsgemäße Ausgestaltung eine duale Zentrifuge bereitgestellt werden, die eine ausreichend lange Laufdauer und gleichzeitig entsprechend hohe Zentrifugalkräfte für eine Zentrifugation und für effiziente Homogenisationsprozesse gewährleisten kann. So wird neben dem einfachen Mischen und Mixen auch die Separation und Homogenisierung ermöglicht.

Die für die Homogenisierung notwendigen hohen Kräfte mit einer Rückdrehung der Zentrifugenbehälter und langen Laufzeiten zu verbinden ist nach den im Stand der Technik bekannten Vorrichtungen nicht möglich. Dies wird jedoch durch die erfindungsgemäße Lagerung sichergestellt.

Vorzugsweise kann in der Ausnehmung Schmiermittel eingefüllt und derart aufgenommen sein, dass dieses auch während der Zentrifugation in der Ausnehmung verbleibt.

Indem Schmiermittel separat in die Ausnehmung einfüllbar ist, kann eine verbesserte Schmierung gegenüber dem aus einem Lager austretenden Schmiermittel gewährleistet werden. Das Schmiermittel ist insbesondere als homogenes Schmiermittel ausgebildet, um eine Trennung während der Zentrifugation zu vermeiden. Vorzugsweise kann als Schmiermittel Öl verwendet werden.

In einer besonders vorteilhaften Ausführungsform ist die Rotationseinheit über wenigstens ein Wälzlager mit dem Zentrifugenrotor verbunden. Wälzlager stellen eine besonders effektive Art der Lagerung dar.

Ist die Rotationseinheit über Wälzlager insbesondere Kugellager gegenüber dem Zentrifugenrotor gelagert, erweist sich auch hier eine Befüllung der Ausnehmung mit Schmiermittel als vorteilhaft. Der Füllstand kann derart gewählt sein, dass die vorhandenen Wälzlager während der Zentrifugation wenigstens teilweise mit Schmiermittel benetzt werden.

Vorzugsweise ist die Rotationseinheit gegenüber dem Rotorkorpus so gelagert, dass die Rotationseinheit mit dem Lagerinnenring und der Rotorkorpus mit dem Lageraußenring verbunden ist. Zudem kann der Rotorkorpus das Lager wenigstens teilweise an der Lagerunterseite umschließen.

Durch diese Anordnung des Lagers wird es möglich, dass das im Lager enthaltene Schmiermittel, welches ebenfalls den Zentrifugalkräften ausgesetzt ist und daher aus dem Lager herausgedrückt wird, im Zentrifugenrotor gehalten wird. Das Schmiermittel wird auf diese Weise von der im Rotorkorpus eingebrachten Wanne aufgenommen. Durch die auftretenden Zentrifugalkräfte sammelt sich ausgetretenes Schmiermittel an der radial außen liegenden Wannenwand. Eine Lageranordnung, bei der der Außenring des Lagers an der radial außen liegenden Wand der Ausnehmung anliegt, vereinfacht die Schmierung eines solchen Lagers während der Zentrifugation, wobei weniger Schmiermittel eingesetzt werden muss.

In einer weiteren vorteilhaften Ausgestaltung ist das Lager als Schräglager ausgebildet. Dies erlaubt es, die Kräfte während der Zentrifugation ideal aufzunehmen. Vorteilhafte Einstellungen für ein Schräglager ergeben sich in einem Winkelbereich von 5 - 85°, bevorzugt von 25 - 65°, besonders bevorzugt von 40-50°. Diese Winkel können abhängig vom Anwendungsbereich gewählt werden.

Das Schräglager ist für einen Winkel insbesondere von 45 ° ausgebildet. Diese Ausgestaltung trägt der Einbausituation der Rotationseinheit insbesondere bei einem Winkelrotor Rechnung.

In einer weiteren vorteilhaften Ausgestaltung kann die Rotationseinheit über einen in den Rotorkorpus hineinragenden Schaft mit dieser verbunden sein. Insbesondere kann durch die umfassende Aufnahme des Lagers im Rotorkorpus dieses mit zusätzlichem Schmiermittel versehen werden. Auf diese Weise kann sichergestellt werden, dass das Lager wenigstens an seiner Außenseite immer wieder mit Schmiermittel benetzt wird, was ein "fressen" des Lagers verhindert. Da das Schmiermittel in der Ausnehmung verbleibt, kann eine Kontamination der Umgebung vermieden werden.

Die in das Lager eingesetzte Rotationseinheit kann mit einer Aufnahmeeinrichtung verbunden werden.

Vorzugsweise kann die Rotationseinheit einen Durchmesser aufweisen der in etwa der Hälfte des Rotordurchmessers entspricht. Besonders eignet sich ein Bereich von 30% bis 45% des Rotordurchmessers. Dadurch wird eine hohe Flexibilität in der Gestaltung der Aufnahmeeinrichtungen erreicht. Insbesondere ist dabei die Rotationsachse der Rotationseinheit gegenüber der Hauptrotorachse geneigt.

Die in das Lager eingesetzte Rotationseinheit kann in Baueinheit mit einer Aufnahmeeinrichtung, insbesondere einem Käfig, ausgebildet sein. Vorzugsweise weist die Aufnahmeeinrichtung Ausnehmungen auf, wodurch die Wärmeabfuhr der während dem Betrieb entstehenden Wärme verbessert wird. Während der Bearbeitung nach dem Stand der Technik können in einem in die Aufnahmeeinrichtung eingesetzten Probenbehälter Temperaturen bis 80 °C auftreten, wodurch temperaturempfindliche Proben nicht verarbeitbar sind. Durch die Ausnehmungen in der Wandung der Aufnahmeeinrichtung können zirkulierende Luftströme während der Drehung vorteilhaft zur Kühlung der Probenbehälter bzw. der darin enthaltenen Proben eingesetzt werden. Dies hat den Vorteil, dass wärmeempfindliche Proben prozessiert werden können.

Alternativ kann eine Aufnahmeeinrichtung, insbesondere ein Käfig, an der Rotationseinheit lösbar befestigbar sein. In die Aufnahmeeinrichtung kann ein Probengefäß mit Zentrifugiergut eingesetzt werden.

Die Aufnahmeeinrichtung kann auch selbst als Zentrifugenbehälter gestaltet sein, welcher lösbar an der Rotationseinheit befestigbar ist. Das Zentrifugiergut wird dann direkt in die Aufnahmeeinrichtung eingebracht.

Ferner kann eine Reduzierung vorgesehen sein, die einerseits in die Aufnahmeeinrichtung einsetzbar ist, und andererseits eine Aufnahmefunktion für einen oder mehrere Zentrifugenbehälter zur Verfügung stellt. Durch Reduzierungen in Verbindung mit dem relativ großen Durchmesser der Rotationseinheit kann die erfindungsgemäße Vorrichtung mit sehr variablen Gefäßen, vielen Probenbehältern und langen Probenbehältern, wie beispielsweise Falcon-Tubes eingesetzt werden.

Die Reduzierung ist in ihrer Ausgestaltung, insbesondere in ihrer Größe und Geometrie an die vorgesehenen Zentrifugenbehälter und die Aufnahmeeinrichtung angepasst.

Die Reduzierung kann auch ohne Aufnahmeeinrichtung direkt mit der Rotationseinheit verbunden werden.

Die Reduzierung weist insbesondere Ausnehmungen in ihrem Umfangsbereich auf. Dadurch wird die Wärmeabfuhr aus dem Probenbehälter, die aufgrund der hohen Drehzahlen entsteht, verbessert.

Erfindungsgemäß ist an der Rotationseinheit eine Verzahnung vorgesehen, in welche ein Zahnrad zum Zweck der Drehbewegungsübertragung eingreift.

Durch die Übertragung der Drehbewegung mittels eines Zahnrads bzw. eines Zahnradgetriebes kann eine über einen längeren Zeitraum andauernde duale Zentrifugation durchgeführt werden.

Das mit der Rotationseinheit in Eingriff gebrachte Zahnrad kann ein Antriebszahnrad oder ein Übertragerzahnrad sein.

Ein Antriebszahnrad zeichnet sich dadurch aus, dass eine relative Drehbewegung zwischen Antriebszahnrad und Zentrifugenrotor stattfindet. Dies ist auch bei einem feststehenden Zahnrad der Fall.

So kann beispielsweise eine Drehbewegung vom Zentrifugenrotor auf die Rotationseinheit übertragen werden, wenn das Antriebszahnrad mit der Rotationseinheitsverzahnung in Eingriff steht.

In einer weiteren Ausführungsform kann zwischen dem Antriebszahnrad und der Rotationseinheitsverzahnung ein Übertragerzahnrad vorgesehen sein. Diese Ausgestaltung hat den Vorteil, dass durch eine Anpassung der Durchmesser des Antriebs- und des Übertragerzahnrads eine einfache Einstellung unterschiedlicher Drehgeschwindigkeitsverhältnisse durchführbar ist. Ferner wird durch ein Übertragerzahnrad die Flexibilität in der Anordnung der Probenbehälter am Zentrifugenrotor erhöht.

Besonders vorteilhaft ist eine Ausgestaltung der Zentrifuge als duale symmetrische Zentrifuge. Dies hat den Vorteil, dass die Verarbeitungsmenge durch wenigstens zwei Rotationseinheiten, insbesondere drehbare Zentrifugenbehälter, gegenüber einer Dualen asymmetrischen Zentrifuge erhöht ist. Die asymmetrischen Zentrifugen haben ferner den Nachteil, dass sie ein Dummy-Gewicht mitführen müssen, um Unwuchten zu kompensieren. Eine genaue Justierung, wie es insbesondere bei hohen Drehzahlen nötig ist, ist aufwändig und zudem limitierend, da der Dummy gegeben ist und das Gewicht auf der Probenseite das Gewicht des Dummys nicht überschreiten darf. Ist das Gewicht der Probe niedriger als das des Dummys, müssen Ausgleichsgewichte angebracht werden. Dies hat mit großer Sorgfalt zu geschehen, da sonst Unwucht entsteht.

Gemäß einem weiteren Aspekt der Erfindung ist eine Vorrichtung zur Homogenisierung und Separation von Medien angegeben, wobei Mittel vorgesehen sind, durch die wenigstens zwei unterschiedliche Drehgeschwindigkeiten der Rotationseinheit einstellbar sind.

Bei ähnlichen DZ-Prozessen wie z.B. der Herstellung von kleinen Mengen an Liposomen in unterschiedlichen Gefäßen müssen deutlich unterschiedliche Prozessparameter, insbesondere ein unterschiedliches Verhältnis von Haupt- zu Nebendrehung verwendet werden.

Die im Stand der Technik bekannten Vorrichtungen haben den Nachteil, dass keine optimalen Bedingungen für einen definierten DZ-Prozess eingestellt werden können, wie sie z.B. bei der Homogenisation zur Herstellung von Nanopartikeln notwendig sind. Die Prozessparameter müssen hier hinsichtlich ihres Verhältnisses zueinander und hinsichtlich der Probenmenge auf das Verhältnis von Haupt- zu Rückdrehung abgestimmt werden.

Es ist Aufgabe der Erfindung, eine Vorrichtung anzugeben, in der die Bedingungen für unterschiedliche DZ-Prozesse optimal angepasst werden können.

Die Aufgabe wird durch die Merkmale des Anspruchs 1 gelöst.

Zur Verbesserung einer Dualen Zentrifugenvorrichtung, umfasst die Vorrichtung in bekannter Weise eine Zentrifuge mit einem um eine Motorachse eines Zentrifugenmotors drehbaren Zentrifugenrotor, an welchem wiederum wenigstens eine Rotationseinheit derart anbringbar ist, dass diese um eine zur Motorachse unterschiedlichen Nebendrehachse drehbar gelagert ist.

Es sind Mittel vorgesehen durch die wenigstens zwei unterschiedliche Drehgeschwindigkeiten der Rotationseinheiten einstellbar sind. Die Drehung der Rotationseinheiten um die Nebendrehachse wird unter anderem als Rückdrehung bezeichnet.

Überraschenderweise hat sich gezeigt, dass sich Parameter wie Menge und Stoffverhältnis durch die Anpassung der Drehzahl kompensieren lassen. So lassen sich diese Parameter beibehalten und trotzdem ideale Ergebnisse bei Dualen Zentrifugationsprozessen erreichen.

Durch die genauere Anpassung der Rückdrehgeschwindigkeit bzw. des Verhältnisses von Haupt- zu Rückdrehung können nunmehr mit einer Vorrichtung zur Dualen Zentrifugation auch sensible Prozesse durchgeführt werden, die bisher mit Vorrichtungen zur Dualen Zentrifugation nicht zu bewerkstelligen waren.

So müssen z.B. im Bereich der pharmazeutischen Entwicklung, wo DZ-Prozesse mit kleinen Probenmengen durchzuführen/zu optimieren und später in größeren Quantitäten durchgeführt werden müssen, verschiedene DZ-Vorrichtungen bereitstehen. Das Bereithalten von unterschiedlichen DZ-Vorrichtungen ist dabei nicht nur sehr teuer, es nimmt auch sehr viel des wertvollen Laborplatzes in Anspruch.

Erfindungsgemäß sind die Mittel derart ausgebildet, dass ein definiertes Verhältnis von Haupt- und Rückdrehung einstellbar ist, wobei die Mittel als mechanische Kopplung ausgebildet sind, durch welche sich das Verhältnis von Haupt- zu Rückdrehung schnell und einfach variieren lässt. Die mechanische Kopplung erfolgt insbesondere über eine Zahnradverbindung, über welche sich ein exaktes, reproduzierbares Rückdrehverhältnis einstellen lässt. Der Rotationseinheits-Antrieb umfasst einen Verzahnung, die in Verbindung mit dem Zentrifugenmotor steht.

Erfindungsgemäß sind die Mittel derart ausgebildet, dass ein zentraler, gegenüber der Motorachse starrer Zahnkranz am Motorgehäuse des Zentrifugenmotors befestigt ist.

Der Zentrifugenrotor kann ein Zahnradpaar aufweisen, wobei das erste Zahnrad mit dem am Motorgehäuse angebrachten Zahnkranz korrespondiert. Das zweite Zahnrad greift in eine Verzahnung an der Rotationseinheit ein. Durch die Größenverhältnisse von zentralem Zahnkranz, und Zahnradpaar können auf einfache Weise durch Austausch des Zentrifugenrotors und des zentralen Zahnkranzes unterschiedliche Übersetzungen von Haupt- zu Rückdrehung realisiert werden.

In einer besonders vorteilhaften Ausgestaltung sind die Mittel zur Anpassung der Rückdrehgeschwindigkeit derart ausgebildet, dass eine Veränderung der Rückdrehgeschwindigkeit während der Zentrifugation ermöglicht wird.

Insbesondere kann die Einstellung der Rückdrehgeschwindigkeit bzw. das Verhältnis von Haupt zu Rückdrehung kontinuierlich oder schrittweise erfolgen, sie kann direkt von der Hauptdrehbewegung abhängen und durch eine variable Übersetzung eingestellt werden oder unabhängig von dieser einstellbar sein.

Es können auch zwei Nebendrehachsen vorgesehen sein, wobei die Rotationsrichtungen der beiden Drehachsen beliebig sind. Diese können anwendungsabhängig entweder beide in die gleiche Richtung oder in gegengesetzten Richtungen (in Relation zur Hauptdrehung) drehen.

Erfindungsgemäß kann nur eine Einrichtung zum Drehen der Rotationseinheiten um eine Nebendrehachse vorhanden sein, aber auch mehrere, die symmetrisch angeordnet sind.

Die Drehungen um die Nebendrehachsen können dann synchron oder auch gleichförmig sein, die Anordnungen (Position, Winkel zur Hauptdrehachse) der Nebendrehachsen sind beliebig, bevorzugt aber rotationssymmetrisch.

Eine Möglichkeit der Anpassung der Drehgeschwindigkeit der Rotationseinheit ergibt sich durch den Einsatz eines DZ-Wechselrotors mit unterschiedlichen Verhältnissen zwischen Haupt- und Nebendrehung. Ein Wechselrotor weist vorzugsweise eine feste Übertragungseinrichtung auf, welche die Drehbewegung des Zentrifugenrotors in einem festen Verhältnis auf die Rotationseinheit überträgt.

Die Verbindungseinheit zwischen Zentrifugenrotor und Zentrifugenmotor ist derart ausgebildet, dass Rotoren mit unterschiedlichen Übertragungseinrichtungen mit unterschiedlichen Übersetzungen auf einfache Weise am Zentrifugenmotor austauschbar sind. Die Verwendung eines Wechselrotors hat neben einer gewissen Flexibilität in der Anpassung der Drehgeschwindigkeit auch den Vorteil, dass die Verarbeitungsmenge, bzw. die Behältergröße abhängig von dem jeweiligen Wechselrotor variiert werden kann. Auf diese Weise kann teurer Laborplatz eingespart werden, da mit einem Grundgerät unterschiedlichen Anforderungen Rechnung getragen werden kann. Zudem kann ein entsprechendes Grundgerät auch als herkömmliche Zentrifuge verwendet werden.

Insbesondere weist eine erfindungsgemäße Vorrichtung einen festen Zahnkranz auf, der drehfest mit dem Zentrifugengehäuse verbunden ist. Als Übertragereinrichtung kann wenigstens ein Zahnradpaar vorgesehen sein, wobei im montierten Zustand ein erstes Zahnrad mit dem festen Zahnkranz in Eingriff gebracht ist und ein zweites Zahnrad mit der Rotationseinheit in Eingriff gebracht ist.

In einer ersten Alternative kann der Zentrifugenrotor ein auf einen standardisierten Zahnkranz abgestimmtes erstes Zahnrad aufweisen, wobei über das Durchmesserverhältnis von erstem zu zweitem Zahnrad dem Zentrifugenrotor ein festes Verhältnis von Haupt- zu Rückdrehung zugeordnet ist.

Gemäß einer weiteren Alternative kann die an der Rotationseinheit vorgesehene Verzahnung direkt in ein am Zentrifugenmotor angeordnetes Zahnrad eingreifen. Eine Anpassung der Drehzahlverhältnisse kann durch den Austausch des Zahnrads und der Rotationseinheiten erfolgen.

So kann durch Austausch des Zentrifugenrotors auf einfache Weise das Verhältnis von Haupt- zu Rückdrehung geändert werden.

In einer zweiten Alternative kann der drehfeste Zahnkranz austauschbar sein. Durch die Austauschbarkeit des drehfesten Zahnkranzes kann der Durchmesser des drehfesten Zahnkranzes auf den Durchmesser eines ersten austauschbaren Zahnrads eines Übertragerzahnradpaars abgestimmt werden. Durch die Abstimmung der Durchmesser von Drehfestem zu einem ersten Zahnrad des Übertragerzahnradpaars kann auf einfache Weise das Verhältnis von Haupt- zu Rückdrehung eingestellt werden, ohne mehrere DZ-Rotoren vorhalten zu müssen.

Eine Verbesserung wird dadurch erreicht, dass die Rotationseinheit derart gestaltet ist, dass seine Drehzahl bei gleicher Hauptdrehzahl anpassbar ist, ohne dass eine grundsätzliche bauliche Veränderung an der Vorrichtung vorzunehmen ist. So kann der Behälterantrieb bei gleicher Hauptdrehgeschwindigkeit wenigstens zwei Geschwindigkeiten verwirklichen. Durch die anpassbare Drehgeschwindigkeit um die Nebendrehachse wird der Verwendungsbereich einer DZ-Vorrichtung signifikant erweitert.

Ein besonderer Vorteil ergibt sich durch die Entkopplung von Drehgeschwindigkeit des Zentrifugenmotors und des Behälterantriebs indem der Behälter gegenüber dem Rotor auch eine negative Geschwindigkeit erreichen kann. Dies entspricht einer Umschaltung zwischen Vor- und Rückdrehung des Behälters im Vergleich zur Hauptdrehung des Rotors. Dadurch können u.a. zwei unterschiedliche Homogenisierungs - oder Misch-Modi in einem DZ-Prozess erreicht werden, wenn z.B. die Innenfläche des Behälters so gestaltet ist, dass je nach Drehrichtung eine unterschiedliche Reibung auf das Homogenisier- bzw. Mischgut einwirkt. Dies kann durch eine richtungsstrukturierte Oberfläche erreicht werden.

In einer weiteren vorteilhaften Ausgestaltung kann die Rotationseinheit über einen Freilauf mit einem Antriebszahnrad, insbesondere dem zentralen Zahnrad, verbunden sein. Dadurch wird die Drehbewegung nur in einer Drehrichtung übertragen. Entsprechend kann durch den Freilauf mit einer Umkehrung der Hauptdrehrichtung eine mechanische Entkopplung der Drehbewegung des Behälters erfolgen. Dies hat den Vorteil, dass die Drehbewegung des Behälters unterbrochen werden kann, so dass z.B. auf einen Misch- oder Homogenisier-DZ-Prozess ein Separations- oder Konzentrations-Prozess folgen kann. In einer weiteren Ausgestaltung kann ein zentrales Zahnrad über ein Kopplungsmittel derart an den Hauptrotor angebunden sein, dass das zentrale Zahnrad durch Rastmittel gegenüber der Rotorachse bedarfsweise drehfest festlegt. Dadurch kann bei Bedarf eine Entkopplung des Zahnrades vor der Zentrifugenachse bewirkt werden, wodurch die Drehung nicht länger auf die Rotationseinheiten übertragen wird, wodurch eine reine Zentrifugation der Proben gewährleistet werden kann.

Eine besonders vorteilhafte Umsetzung der Anpassbarkeit der Behälterdrehgeschwindigkeit kann dadurch erreicht werden, dass der Rotationseinheitsantrieb über ein Schaltgetriebe mit dem Zentrifugenmotor verbunden ist. Die Umschaltung kann entweder mechanisch beim Stillstand des Gerätes erfolgen oder das Schaltgetriebe kann als elektrisch schaltbares Getriebe ausgebildet sein. Durch ein elektrisch schaltbares Getriebe kann die Drehgeschwindigkeit auch während des Betriebs auf einfachere Weise geändert werden.

Insbesondere sind, sofern mehrere Rotationseinheiten vorgesehen sind, diese paarweise in ihrer Geschwindigkeit gekoppelt. So können beispielsweise bei vier Rotationseinheiten zwei gegenüberliegende Rotationseinheiten in einer Getriebeübersetzung, die beiden anderen gegenüberliegenden Rotationseinheiten in einer anderen Getriebeübersetzung betrieben werden.

In einer besonders vorteilhaften Ausführungsform kann das Getriebe in den DZ-Rotor der Zentrifuge integriert werden. Eine Schaltbarkeit des Getriebes kann beispielsweise über eine elektrische Schaltung realisiert werden, wobei die Energie für die Schaltung des Getriebes aus der Rotation des Zentrifugenrotors gewonnen wird.

In einer alternativen Ausführung kann das Getriebe aber auch in den in den Zentrifugenrotor einzusetzenden Rotationseinheit integriert sein. Dies hat den Vorteil, dass die Rotationsgeschwindigkeiten bzw. Geschwindigkeitsbereiche abhängig von der eingesetzten Rotationseinheit festlegbar sind.

Auch eine Schaltung eines in eine Rotationseinheit eingesetzten Getriebes ist möglich.

In einer nicht erfindungsgemäßen Ausgestaltung, ist der Rotationseinheitsantrieb mit einem vom Zentrifugenmotor unabhängigen Rotationseinheitsmotor verbunden. Dies hat den Vorteil, dass die Drehzahl über einen deutlich weiteren Bereich als mit einem mechanischen Schaltgetriebe veränderbar ist, zudem kann die Einstellung stufenlos erfolgen und so eine optimale Anpassung an den DZ-Prozess durchgeführt werden. Außerdem kann auf diese Weise bei der Nebenrotation sehr einfach in der Drehrichtung umgekehrt werden oder auch komplett abgeschaltet werden.

Dieser motorische Rotationseinheitsantrieb kann vorzugsweise in den Zentrifugenrotor integriert sein. Der Elektromotor zum Antrieb der Nebenrotation kann vorzugsweise mittels einer kontaktlosen Übertragung von Energie und Signalen gesteuert werden. Zur kontaktlosen Energieübertragung ist ein Übertrager vorgesehen, der beispielsweise in Art eines Generators ausgebildet sein kann, der aufgrund der Relativbewegung von Rotor zu Zentrifuge, rotorseitig Energie bereitstellt. Alternativ können auch Schleifkontakte zur Energieübertragung eingesetzt werden.

Durch die Energie und Signalübertragung, kann ein Temperatursensor in der Nähe des Probenbehälters integriert werden. Aufgrund des Temperatursensors in Verbindung mit der Signalübertragung an den Hauptrotor, kann eine temperaturgeregelte Ansteuerung von Hauptdrehung zu Nebendrehung erfolgen. Durch die Anpassung von Haupt- und Nebendrehung kann die Temperatur der Probe angepasst werden, wodurch gewährleistet ist, dass auch hitzeempfindliche Proben zuverlässig prozessiert werden können. Auch ist beispielsweise eine Anzeige der Temperatur an einem an der Vorrichtung vorgesehenen Display oder eine Ausgabe der Temperaturdaten über die Laufzeit an einer vorgesehenen Schnittstelle möglich. Durch die Dokumentation kann beispielsweise ein Nachweis erfolgen, dass die Probe während der gesamten Zentrifugation eine Höchsttemperatur nicht überschritten hat.

In einer nicht erfindungsgemäßen Ausführung kann eine Kombination von zwei bis vier Rotationseinheiten, die von zwei Rotationseinheitsmotoren angetrieben werden, verwendet werden. Die beiden Rotationseinheitsmotoren sind dabei symmetrisch im Rotor angebracht. Nach dem Stand der Technik kann eine kontaktlose Energieübertragung mit einer Übertragungseinheit nur eine begrenzte Leistung übertragen. Durch die Nutzung von zwei Motoren können zwei Übertragungseinheiten verwendet werden, wodurch die Antriebsleistung je Rotationseinheit erhöht wird.

In einer weiteren nicht erfindungsgemäßen Ausgestaltung kann jedoch auch nur ein Behältermotor für den Antrieb der Rotationseinheiten von vorzugsweise zwei bis vier Rotationseinheiten, verwendet werden. Der Rotationseinheitsmotor ist dann insbesondere koaxial zur Hauptdrehachse am Rotor angeordnet, wodurch er nur sehr begrenzt den Fliehkräften ausgesetzt ist.

Der elektromotorische Antrieb kann ähnlich wie bei dem mechanischen Antrieb durch eine mechanische Kopplung mit dem Hauptantrieb über ein Zahnradgetriebe oder einen Keilriemen verbunden sein. Dazu kann auch insbesondere eine Verzahnung an der Rotationseinheit vorgesehen sein.

In einer nicht erfindungsgemäßen Ausführungsform kann der elektrische Rotationseinheitsantriebsmotor als Schrittmotor ausgebildet sein. Durch den Schrittmotor kann eine genauere Positionierung der Behälter gewährleistet werden. Dies hat Vorteile bei der Durchführung eines DZ-Prozesses, bei dem eine Durchmischung mit einer Separation kombiniert werden soll, wie es z.B. bei einer Flüssig/Flüssig- oder Flüssig/Fest-Extraktion der Fall ist.

In einer weiteren vorteilhaften Ausgestaltung kann die Aufnahmeeinrichtung Mitnahmemittel aufweisen, welche die Reduzierungen oder Probengefäße gegenüber der Aufnahmeeinrichtung arretiert bzw. fixiert. So ist zum einen eine sichere Positionierung während des Zentrimix-Prozesses gewährleistet zum anderen ist eine Festlegung in Rotationsrichtung gewährleistet. Vorzugsweise kann auch die Probe über ein separates Probengefäß im Zentrifugenbehälter aufgenommen werden. Dieses kann insbesondere über einen Adapter, der auf den Zentrifugenbehälter abgestimmt ist, geschehen.

In besonders vorteilhafter Weise ist die oben genannte Erfindung in einem Verfahren zur Erzeugung von Nanopartikeln zu verwenden.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugszeichen verwendeten Begriffe und zugeordneten Bezugszeichen verwendet. In der Zeichnung bedeutet:
- Fig. 1: eine Schnittansicht einer erfindungsgemäßen Vorrichtung bei der die mit einer Verzahnung versehenen Rotationseinheiten über ein zentrales Zahnrad angetrieben werden,
- Fig. 2: eine Draufsicht auf die Vorrichtung gemäß Fig. 1,
- Fig. 3: eine Schnittansicht einer erfindungsgemäßen Vorrichtung bei der die mit einer Verzahnung versehenen Rotationseinheiten über ein Übertragerzahnradpaar über ein zentrales Zahnrad angetrieben werden,
- Fig. 4: eine Draufsicht auf die Vorrichtung gemäß Fig. 3,
- Fig. 5: eine Draufsicht auf Anordnungen von zentralem Zahnrad und Übertragerzahnrad,
- Fig. 6: eine Schnittansicht des Rotorkorpus und der Rotationseinheit, die in einer Ausnehmung des Rotorkorpus aufgenommen ist,
- Fig. 7: eine Schnittansicht einer nicht erfindungsgemäßen Vorrichtung, wobei zum Antrieb der Rotationseinheiten ein zentraler Elektromotor vorgesehen ist,
- Fig. 8: eine Draufsicht auf die nicht erfindungsgemäße Vorrichtung gemäß Fig. 7,
- Fig. 9: eine Schnittansicht des Rotorkorpus und der Rotationseinheit, die in einer Ausnehmung des Rotorkorpus aufgenommen ist, und
- Fig. 10: Messergebnisse der Verteilungsgüte bei der Herstellung von Liposomen unter unterschiedlichen Bedingungen.

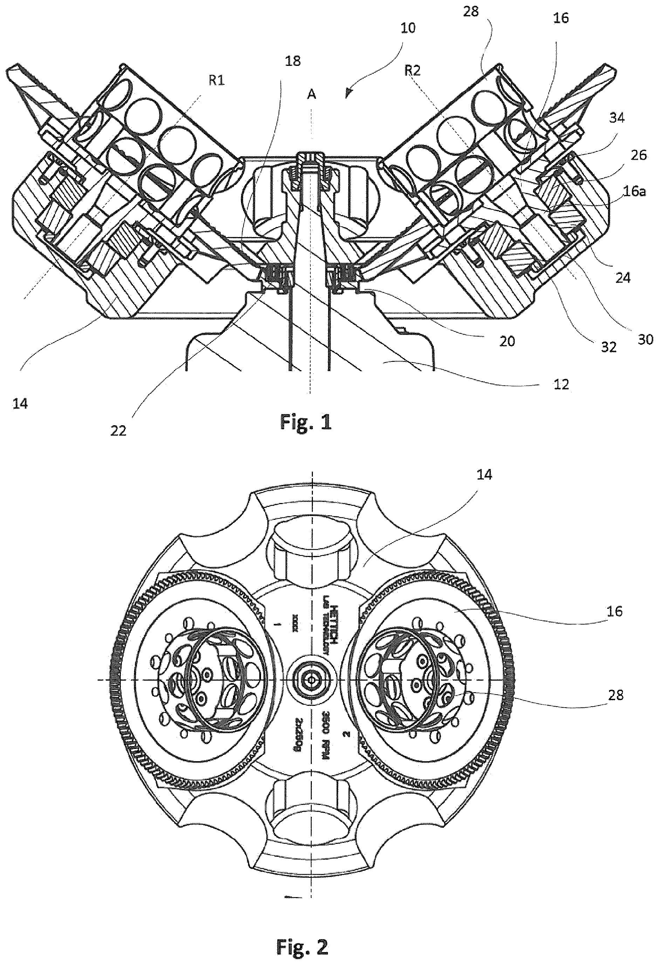

Fig. 1 zeigt eine Duale Zentrifuge 10 zur Homogenisierung und zur Separation von Medien die einen Zentrifugenmotor 12 und einen Zentrifugenrotor 14 umfasst. Der Zentrifugenrotor 14 dreht um die Achse A, die der Antriebsachse des Zentrifugenmotors 12 entspricht. Der Zentrifugenrotor 14 ist mit Rotationseinheiten 16 verbunden, wobei die Rotationseinheiten 16 um ihre Rotationsachsen R1, R2 drehbar gelagert sind. Die Rotationseinheiten 16 weisen in ihrem Umfangsbereich Verzahnungen 18 auf, die in einen am Zentrifugenmotorgehäuse 20 drehfest befestigten zentralen Zahnkranz bzw. ein drehfest befestigtes Zahnrad 22, eingreifen. Durch die Drehung des Zentrifugenrotors 14 gegenüber dem Motor 12 um die Motorachse A, werden die Rotationseinheiten 16 um ihre Rotationseinheitsachse R gedreht. Zur Lagerung der Rotationseinheit 16 im Zentrifugenrotor 14 ist im Zentrifugenrotor 14 je Rotationseinheit 16 eine Ausnehmung 30 vorgesehen, in welche je Rotationseinheit 16 zwei Lager 24, 26, die als Schrägkugellager ausgebildet sind, eingesetzt sind. Die Schrägkugellager stützen sich mit ihrem Außenring an der Ausnehmung im Zentrifugenrotor 14 ab. Der Innenring der Lager ist mit dem Schaft 16a der Rotationseinheit 16 verbunden. Die Ausnehmung 30 im Korpus des Zentrifugenrotors 14 ist derart gestaltet, dass diese einen geschlossenen Boden, insbesondere eine becherförmige Ausgestaltung ergibt. Diese Gestaltung der Aufnahme der Rotationseinheit 16 erlaubt es, das aus dem Lager 24, 26 austretende Schmiermittel in der Zentrifugeneinheit, respektive im Zentrifugenrotor 14 zu halten und so die Schmierung der Kugellager 24, 26 zu gewährleisten, obwohl das Schmiermittel aus dem Lager 24, 26 selbst austritt.

Durch die Zentrifugalkraft während der Rotation des Zentrifugenrotors 14 wird das Schmiermittel an den radial äußeren Becherrand der Ausnehmung 30 verbracht und sammelt sich dort. Auf diese Weise können die Kugellager 24, 26 auch durch bereits ausgetretenes Schmiermittel während des Betriebs weiter geschmiert werden. Dadurch kann eine hohe Rotationsgeschwindigkeit sowohl des Zentrifugenrotos 14 als auch der Rotationseinheit 16 bei langer Laufzeit erreicht werden.

Ferner zeigt Fig. 1, dass die Rotationseinheit 16 mit ihrem Schaft 16a durch die Kugellager 24, 26 erstreckt ist, wobei am Ende des Schaftes 16a ein Spannring 32 angeordnet ist, der die Kugellager 24, 26 mit der Rotationseinheit 16 verspannt. Darüber hinaus ist an der Oberseite des Korpus des Zentrifugenrotors 14 bzw. an der Oberseite der becherförmigen Ausnehmung 30 ein Blech 34 angeordnet, dass die Kugellageranordnung im Rotorkorpus hält. Ferner stellt dies eine gewisse Abdeckung dar, um das Austreten von Schmiermitteln aus dem Zentrifugenbecher während der Zentrifugation zu vermeiden.

Fig. 2 zeigt eine Draufsicht auf den Zentrifugenrotor 14 gemäß Fig. 1. In dieser Ansicht gut zu erkennen ist, dass der Rotor 14 in einer ersten Achse zwei Rotationseinheiten 16 mit einem aufgeschraubten Käfig 28 aufweist in welchen wiederrum wenigstens ein Probengefäß mit einem Zentrifugiergut eingesetzt werden kann. In der zu dieser Achse orthogonal liegenden Achse sind zwei reine Zentrifugierplätze bereitgestellt. Zentrifugierbehälter die in diese Plätze eingesetzt werden, können nicht um ihre eigene Achse gedreht werden.

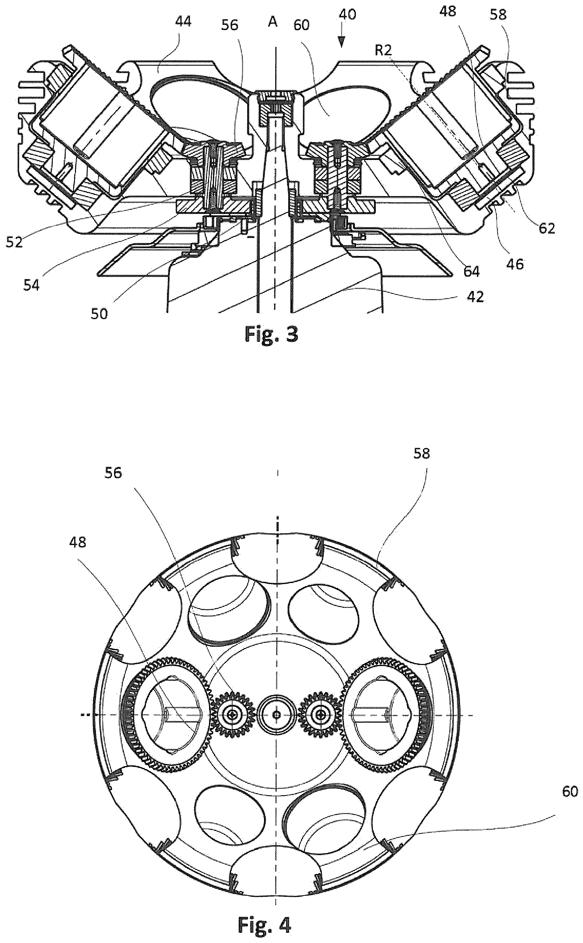

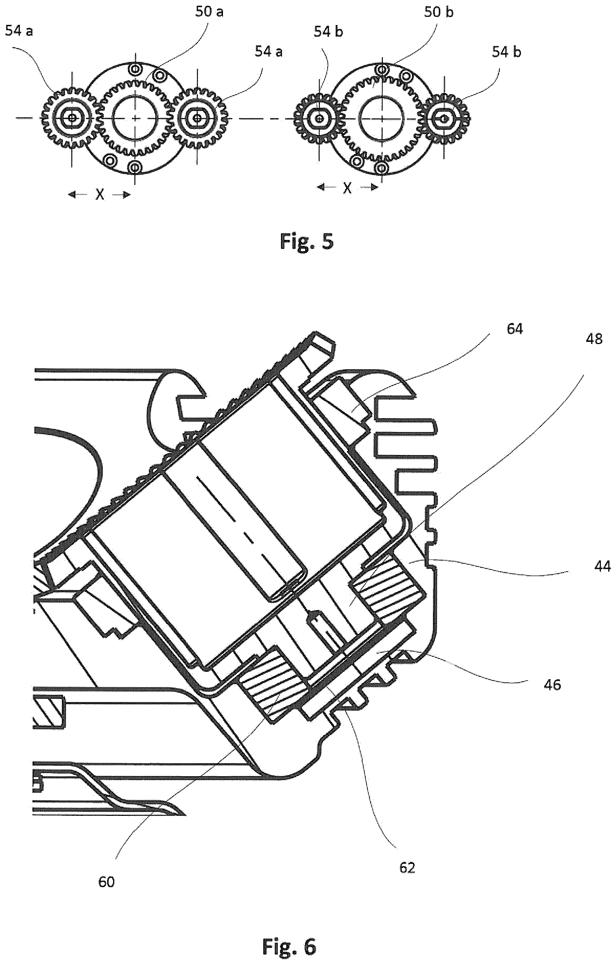

Fig. 3 zeigt die Schnittansicht einer Zentrifuge 40 zur Homogenisierung und zur Separation von Medien, bei welcher die Rückdrehgeschwindigkeit der Rotationseinheiten 48 auf einfache Weise einstellbar ist. Die Vorrichtung zur Zentrifugation 40 umfasst einen Zentrifugenmotor 42 der um die Motorachse A dreht. An dem Zentrifugenmotor 42 ist ein Zentrifugenrotor 44 über eine Schraubverbindung anzubringen. In den Korpus des Zentrifugenrotors 44 sind becherförmige Ausnehmungen 46 eingebracht. In diese becherförmigen Ausnehmungen 46 sind zur dualen Zentrifugation Rotationseinheiten 48 eingesetzt, wobei der Aufbau der Rotationseinheiten 48 in Fig. 6 näher erläutert wird. Zur Übertragung der Drehbewegung um die Rotationsachse R1, R2 der Rotationseinheiten 48 ist ein, gegenüber dem Zentrifugenrotor 44 drehfester zentraler Zahnkranz bzw. drehfestes zentrales Zahnrad 50 vorgesehen.

Dieses kann bei abgenommenen Zentrifugenrotor 44 auf einfach Weise mit dem drehfesten Motorgehäuse beispielsweise durch eine Schraubverbindung verbunden werden.

Ferner sind zur Übertragung der relativen Drehbewegung zwischen Rotor 44 und Zentrifugenmotor 42 Zahnradpaare 52 vorgesehen, wobei ein Zahnradpaar 52 ein erstes Zahnrad 54, dass mit dem zentralen Zahnrad 50 in Verbindung steht, umfasst und ein zweites Zahnrad 56, dass mit der Verzahnung der Rotationseinheit 48 in Verbindung steht. Das Verhältnis von Haupt- zu Rückdrehung ist somit durch das Übertragungsverhältnis der Zahnradanordnung 50, 54, 56 gegeben. Da die Zahnräder 54, 56 des Zahnradpaares 52 auf einfache Weise austauschbar sind, kann auf einfache Weise das Drehzahlverhältnis geändert werden, indem die Zahnräder 54 und das mit diesem in Eingriff stehende zentrale Zahnrad 50 im Durchmesser angepasst werden. Ein Beispiel für Zahnradanordnungen 50, 54 für unterschiedliche Drehzahlübertragungen ist in Fig. 5 dargestellt. Auf diese Weise können mit dem Austausch von nur drei Bauteilen die Rückdrehgeschwindigkeit der Rotationseinheiten 48 angepasst werden. Ferner können die Zentrifugen durch Austausch des Rotors auch als "normale" Zentrifuge verwendet werden.

Fig. 4 zeigt einen Zentrifugenrotor gemäß Fig. 3 in Draufsicht, wobei hier besonders gut das erste Zahnrad 56 des Zahnradpaares 52 zu sehen ist, welches in die Verzahnung der Rotationseinheit 48 eingreift. Ferner sind Kühleinrichtungen 58 am Rotor angebracht, in Form von Kühlrippen bzw. Ausnehmungen um eine größere Oberfläche zur besseren Wärmeabfuhr zu schaffen. Wie auch im Ausführungsbeispiel der Fig. 1 sind hier noch weitere Zentrifugierplätze 60 zur "normalen" Zentrifugation vorgesehen.

Fig. 5 zeigt zwei Sets eines zentralen Zahnkranzes bzw. eines zentralen Zahnrades 50a, 50b sowie das mit dem zentralen Zahnrad 50a in Eingriff stehenden Zahnrads 54a, 54b der die Rotationseinheit antreibenden Zahnradpaares. Fig. 5 ist besonders gut zu entnehmen, inwiefern eine Durchmesseranpassung des zentralen Zahnrads 50a, 50b und des ersten Zahnrads 54a, 54b der Übertragerzahnräder das Drehzahlverhältnis anpassbar ist, ohne dass der Achsabstand X variiert werden muss. Durch den Austausch dieser beiden Bauteile, können auf einfache Weise die Änderungen des Verhältnisses von Haupt- zur Rückdrehung bereitgestellt werden.

Fig. 6 zeigt eine vergrößerte Darstellung der Aufnahme der Rotationseinheit 48 in den Rotorkorpus 44. Der Rotorkorpus 44 weist zur Aufnahme der Rotationseinheit 48 eine becherförmige Ausnehmung 46 auf. In diese Ausnehmung ist ein Kugellager, insbesondere Schrägkugellager 60 eingesetzt. Dieses ist über ein Halteblech 62 gegenüber der Rotationseinheit 48 verspannt. Ferner ist im oberen Bereich der Ausnehmung 46 ein Gleitlager 64 zur Lagerung der Rotationseinheit 48 vorgesehen. Die becherförmige Ausnehmung 46 im Rotorkorpus 44 ist derart gestaltet, dass sich während der Zentrifugation aus dem Kugellager austretendes Schmiermittel im radial äußeren Bereich des Zentrifugenrotors 44 auf Höhe des Kugellagers sammelt und die Schmierung für diese bereitstellt. Dadurch können hohe Drehzahlen und entsprechend hohe Zentrifugationskräfte bereitgestellt werden. Durch die kontinuierliche Schmierung sind auch lange Laufzeiten der Zentrifuge gewährleistet.

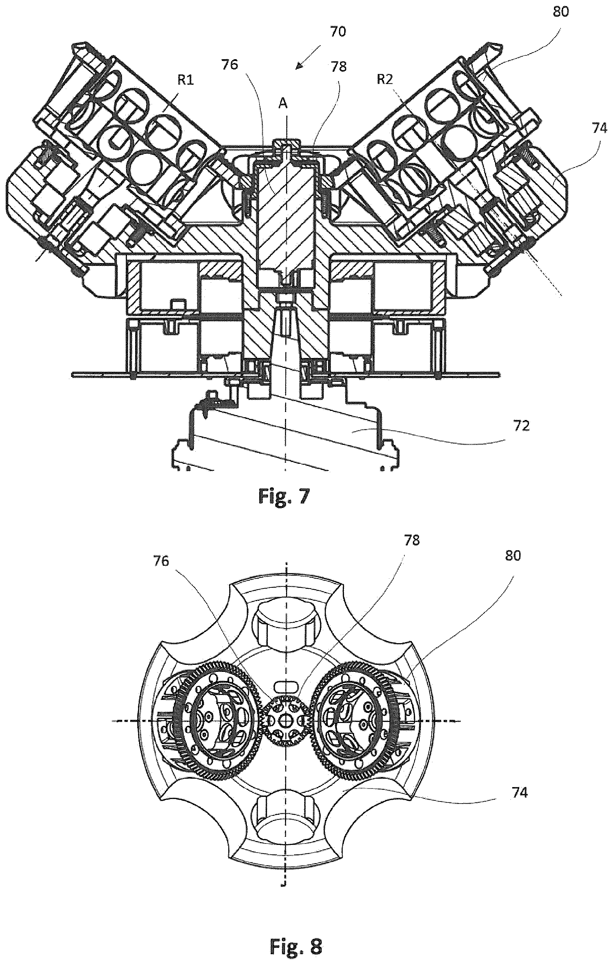

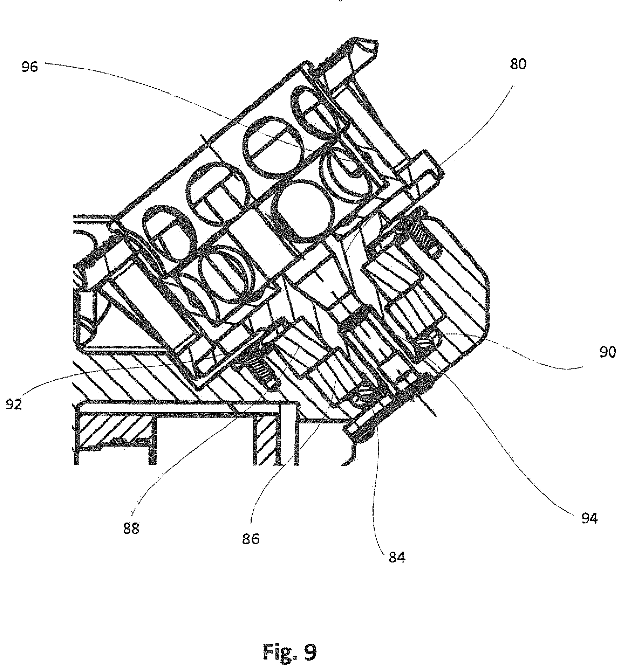

Fig. 7 zeigt eine nicht erfindungsgemäße duale Zentrifuge 70 mit veränderlicher Rückdrehgeschwindigkeit. Wie üblich weist diese Zentrifuge einen Zentrifugenmotor 72 auf, auf welchen ein Zentrifugenrotor 74 aufgesetzt ist. Der Zentrifugenrotor 74 umfasst in dieser Ausführungsform einen zusätzlichen Rotationseinheitsmotor 76, der mit einem Antriebszahnrad 78 versehen ist, welches mit der Verzahnung der Rotationseinheit 80 in Eingriff steht und für eine entsprechende Drehung der Rotationseinheit 80 um die Rotationseinheitsachse R1, R2 sorgt. Die Rückdrehgeschwindigkeit der Rotationseinheiten 80 ist abhängig von der Drehgeschwindigkeit des Rotationseinheitsmotors 76. Die Übertragung der Energie für den Rotationseinheitsmotor 76 erfolgt insbesondere kabellos. Da durch die Verwendung des Elektromotors als unabhängigen Rotationseinheitsmotor 76 als die Rotationsgeschwindigkeit zum einen unabhängig von der Drehgeschwindigkeit des Zentrifugenrotors 74 und zum anderen auch während des Betriebs angepasst und verändert werden kann, kann dadurch eine Vielzahl an Anwendungen realisiert werden. Besonders vorteilhaft ist, dass durch die Anpassung der Rotationsgeschwindigkeit, insbesondere Rückdrehgeschwindigkeit während des Betriebs auch eine Temperaturregelung der Probe erfolgen kann. Dies wird im Detail in Fig. 9 näher erläutert.

Fig. 8 zeigt den Zentrifugenrotor 74 nach Fig. 7 in einer Draufsicht wobei deutlich zu erkennen ist, wie die Verzahnungen der Rotationseinheiten 80 in die Verzahnung des Antriebszahnrad 78, das mit dem Rotationseinheitsantriebsmotor 76 verbunden ist, eingreift.

Fig. 9 zeigt eine vergrößerte Ansicht der in Fig. 7 und 8 erläuterten nicht erfindungsgemäßen Ausführungsform. Im Wesentlichen entspricht der Aufbau mit einem Rotor 74 in welchem eine im Wesentlichen becherförmige Ausnehmung 84 eingebracht ist, die im unteren Bereich eine Auffangwanne für das Schmiermittel bildet. In die becherförmige Ausnehmung 84 sind zwei Schräglager 86, 88 übereinanderliegend angebracht. Diese sind über einen Spannring 90 mit der Rotationseinheit 80 weitgehend spielfrei verbunden. Die Außenringe der Kugellager 86, 88 werden durch ein Halteblech 92 welches mit dem Zentrifugenrotor verschraubt ist in der becherförmigen Ausnehmung 84 gehalten.

Die Rotationseinheit ist somit in axialer Richtung fest mit dem Zentrifugenrotor 74 verbunden dieser Ausgestaltung weist der Boden der becherförmigen Ausnehmung 84 eine zylinderförmige Erhöhung auf, die in eine Ausnehmung des Schafts der Rotationseinheit hineinragt. Die zylinderförmige Erhöhung sorgt dafür, dass der die Auffangwanne des Schmiermittels der becherförmigen Ausnehmung 84 einen im Wesentlichen ringförmigen Boden hat. Innerhalb der zylindrischen Erhöhung 94 ist ein Temperatursensor eingebracht, der die Temperatur des zu zentrifugierenden Mechanismus messen kann. Abhängig von dieser gemessenen Temperatur kann die Drehgeschwindigkeit und Rotationsgeschwindigkeit der Rotationseinheiten 80 derart angepasst werden, dass eine bestimmte gewünschte Temperatur eingestellt werden kann. Die Rotationseinheit ist mit einer käfigartigen Aufnahmeeinrichtung 96 verbunden, diese weist Ausnehmungen in Form von Löchern auf um eine bessere Temperaturabfuhr aus der erwärmten Probe zu gewährleisten. In diese Aufnahmeeinrichtung 96 können Probengefäße oder Adapter respektive Reduzierungen eingesetzt werden, in welche wiederum Probengefäße eingesetzt sind.

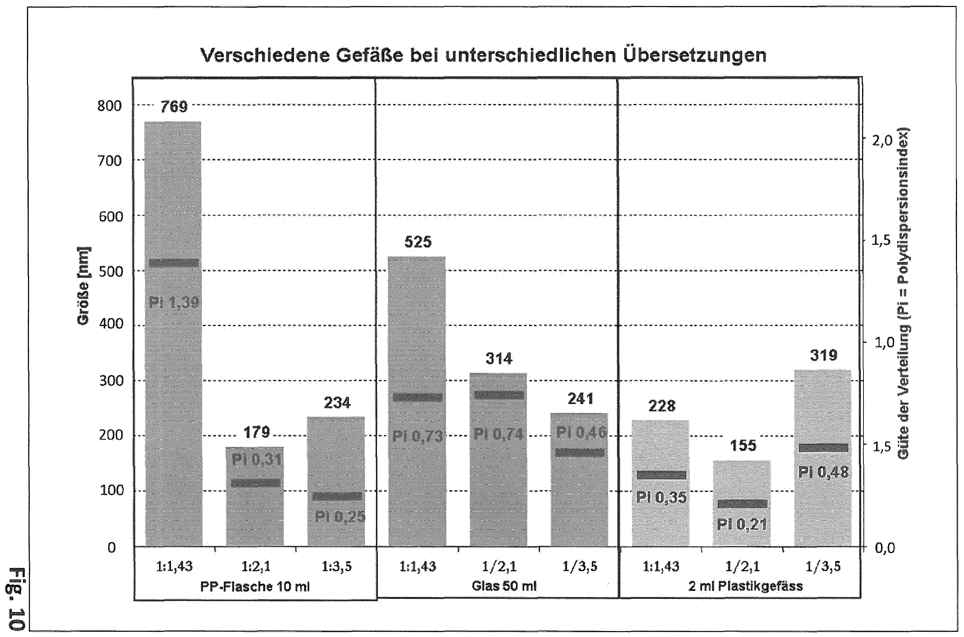

Fig. 10 zeigt als Anwendungsfall die Herstellung von Liposomen bei unterschiedlichen Drehzahlverhältnissen zwischen Haupt und Rückdrehung.

Untersucht wurde die Herstellung von Liposomen durch Homogenisation (jeweils 30 min) einer molekular dispersen Mischung von hydriertem Ei-Phosphatidylcholin und Cholesterol (55:45 mol/mol) mit 60 Gew.% Wasser und der Zugabe von 100 Gew% Glasperlen (1 mm). Der DZ-Homogenisations-Prozess wurde in 10 ml PP-Fläschchen (Lange: 43,3 mm Breite: 23 mm), Glas-Injektionsfläschchen (50 ml, Durchmesser 42 mm) und 2 ml Plastikgefäss (Twist-Top-Vials) untersucht.

Mit dem Einsatz der erfindungsgemäßen DZ-Vorrichtung mit Wechsel--Rotor gemäß Fig. 3 in einer Standard-Zentrifuge Hettich Rotanta 460R konnten verschiedene Verhältnisse von Haupt- und Nebendrehung eingestellt und untersucht werden (1:1,43; 1:2,1; 1:3,5). Die Ergebnisse sind in der Graphik dargestellt. Der DZ-Homogenisierprozess wurde bei 3.500 rpm Hauptdrehung durchgeführt.

Die Ergebnisse zeigen, dass - trotz der Ähnlichkeit der Experimente (gleicher DZ-Homogensierprozess, gleiche Lipide, gleiche Homogenisierhilfe etc.) - die Nutzung von unterschiedlichen Probengefäßen bereits deutlich unterschiedliche Verhältnisse von Haupt- zu Nebendrehung für die Herstellung von möglichst kleinen Liposomen mit einer möglichst schmalen Größenverteilung (niedriger PI-Wert) erfordert. Die gewünschten, möglichst kleinen Liposomen mit einem niedrigen PI-Wert entstehen in den PP-Fläschchen insbesondere bei mittleren Übersetzungsverhältnissen. Dieses trifft auch für die Nutzung der 2 ml Plastikgefäße (Twist-Top-Vials) zu. Im Gegensatz dazu werden bei Nutzung der 50 ml Glas-Injektionsfläschchen kleinere Liposomen bevorzugt bei hohen Übersetzungsverhältnissen gebildet.

Dies zeigt, dass es kein allgemein optimales Verhältnis zwischen Haupt- und Nebendrehung für einen bestimmten DZ-Prozess gibt, sondern dass das optimale Verhältnis immer den Bedingungen (hier Typ des Vials) angepasst werden muss. Dies veranschaulicht die Bedeutung einer einfachen Anpassungsfähigkeit des Verhältnisses von Haupt zu Rückdrehung insbesondere bei der Herstellung von Liposomen.

### Bezugszeichenliste

- 10: Duale Zentrifuge
- 12: Zentrifugenmotor
- 14: Zentrifugenrotor
- 16: Rotationseinheit
- 16a: Schaft
- 18: Verzahnung
- 20: Zentrifugenmotorgehäuse
- 22: Zahnkranz
- 24: Lager
- 26: Lager
- 28: Käfig
- 30: Ausnehmung
- 32: Spannring
- 34: Blech
- 40: Zentrifuge
- 42: Zentrifugenmotor
- 44: Zentrifugenrotor
- 46: Ausnehmung
- 48: Rotationseinheit
- 50: Zahnrad
- 50a: Zahnrad
- 50b: Zahnrad
- 52: Zahnradpaar
- 54: Zahnrad
- 54a: Zahnrad
- 54b: Zahnrad
- 56: Zahnrad
- 58: Kühleinrichtung
- 60: Zentrifugierplatz
- 62: Halteblech
- 64: Gleitlager
- 70: Zentrifuge
- 72: Zentrifugenmotor
- 74: Zentrifugenrotor
- 76: Rotationseinheitsmotor
- 78: Antriebszahnrad
- 80: Rotationseinheit
- 84: Ausnehmung
- 86: Schräglager
- 88: Schräglager
- 90: Spannring
- 92: Halteblech
- 94: Erhöhung
- 96: Aufnahmeeinrichtung

- A: Achse
- R1: Rotationsachse
- R2: Rotationsachse

## Patentansprüche

1. Vorrichtung zur Homogenisierung und Separation von Medien (10) umfassend eine Zentrifuge (40, 70), die einen um eine Motorachse (A) eines Zentrifugenmotors (12, 42, 72) drehbaren Zentrifugenrotor (14, 44, 74) mit einem Rotorkorpus aufweist, mit dem wenigstens eine Rotationseinheit (16, 48, 80) derart verbunden ist, dass diese zusätzlich um eine zur Motorachse (A) verschiedene Rotationseinheits-Drehachse drehbar ausgebildet ist, und diese über einen Rotationseinheits-Antrieb antreibbar ist, wobei Mittel vorgesehen sind, durch die wenigstens zwei unterschiedliche Drehgeschwindigkeiten der Rotationseinheit (16, 48, 80) einstellbar sind, ferner die Rotationseinheit (16, 48, 80) in ihrem Umfangsbereich mit einer Verzahnung (18) versehen ist, durch welche die Rotationseinheit (16, 48, 80) antreibbar ist, wobei die Rotationseinheit in einer nach unten abgeschlossenen Ausnehmung im Rotorkorpus gelagert ist, wobei der Rotationseinheits-Antrieb eine Verzahnung umfasst, die in Verbindung mit dem Zentrifugenmotor steht, wobei die Verzahnung des Rotationseinheits-Antriebs als zentraler Zahnkranz drehfest mit einem Motorgehäuse des Zentrifugenmotors verbunden ist, und wobei der Zahnkranz zwischen Motorgehäuse (20) und Zentrifugenrotor liegt.

2. Vorrichtung nach Anspruch 1, wobei der Rotationseinheits-Antrieb derart ausgebildet ist, dass zwei Übertragerzahnräder vorgesehen sind, die als Zahnradpaar (52) ausgebildet sind, wobei ein erstes Übertragerzahnrad (54) mit dem zentralen Zahnkranz (50) in Eingriff steht und das zweite Übertragerzahnrad (56) mit der Rotationseinheitsverzahnung.

3. Vorrichtung nach Anspruch 1 oder 2, wobei der drehfeste, zentrale Zahnkranz (50) über die Zentrifugenachse (A) gesteckt werden kann und am Zentrifugenmotorgehäuse (20) befestigt werden kann.

4. Vorrichtung zur Homogenisierung und Separation von Medien (10) nach einem der vorangehenden Ansprüche, wobei ein Lager (24, 26) zur Lagerung der Rotationseinheit vorgesehen ist, welches unterhalb der Position des Schwerpunkts des Zentrifugenbehälters während der Zentrifugation liegt.

5. Vorrichtung nach einem der vorangehenden Ansprüche, wobei die Rotationseinheit (16, 48, 80) als Drehscheibe ausgebildet ist.

6. Vorrichtung nach einem der vorangehenden Ansprüche, wobei die Rotationseinheit (16, 48, 80) eine Aufnahmeeinrichtung (96) umfasst, in welche Zentrifugiergut oder ein Zentrifugiergut enthaltender Zentrifugenbehälter einsetzbar ist.

7. Vorrichtung nach Anspruch 5, wobei eine Reduzierung vorgesehen ist, die in die Aufnahmeeinrichtung (96) einsetzbar ist, wobei in die Reduzierung wiederum ein Zentrifugenbehälter einsetzbar ist.

8. Vorrichtung nach einem der vorangehenden Ansprüche, wobei die Aufnahmeeinrichtung (96) käfigförmig ausgebildet ist und Ausnehmungen (30, 46, 84), insbesondere in Umfangsrichtung aufweist.

9. Verfahren zum Betrieb einer Vorrichtung nach einem der vorangehenden Ansprüche, wobei Probenparameter gemessen werden, und die Drehgeschwindigkeit in Abhängigkeit der Probenparameter eingestellt wird.

10. Verfahren nach Anspruch 9, wobei als Probenparameter die Viskosität und/oder Temperatur gemessen wird.

## Claims

1. Apparatus for homogenization and separation of media (10), comprising a centrifuge (40, 70) which has a centrifuge rotor (14, 44, 74) that is adapted to rotate about a motor axis (A) of a centrifuge motor (12, 42, 72) and has a rotor body to which at least one rotation unit (16, 48, 80) is connected in such a manner that the latter is additionally adapted to be rotatable about a rotation unit rotation axis which is different from said motor axis (A), and the latter is adapted to be driven via a rotation unit drive, with means being provided by which at least two different rotation speeds of said rotation unit (16, 48, 80) can be adjusted, which rotation unit (16, 48, 80) is furthermore provided, in its circumferential region, with a toothing (18) which can be used to drive said rotation unit (16, 48, 80), wherein said rotation unit is mounted in a recess in the rotor body which is closed at the bottom, wherein said rotation unit drive comprises a toothing which is in connection with the centrifuge motor, which toothing of the rotation unit drive is non-rotatably connected to a motor housing of said centrifuge motor as a central gear rim, and wherein said gear rim lies between said motor housing (20) and said centrifuge rotor.

2. Apparatus according to claim 1, wherein said rotation unit drive is designed such that two transfer gears are provided in the form of a pair of gears (52), with a first transfer gear (54) thereof meshing with said central gear rim (50) and with the second transfer gear (56) meshing with the toothing of said rotation unit.

3. Apparatus according to claim 1 or 2, wherein said non-rotatable central gear rim (50) is adapted to be fitted over said centrifuge axis (A) and attached to said centrifuge motor housing (20).

4. Apparatus for homogenization and separation of media (10) according to any one of the preceding claims, wherein a bearing (24, 26) is provided for supporting said rotation unit, said bearing being located below the position of the center of gravity of the centrifuge vessel during centrifugation.

5. Apparatus according to any one of the preceding claims, wherein said rotation unit (16, 48, 80) is designed as a turntable.

6. Apparatus according to any one of the preceding claims, wherein said rotation unit (16, 48, 80) comprises a receptacle (96) into which a material to be centrifuged or a centrifuge vessel containing a material to be centrifuged can be inserted.

7. Apparatus according to claim 5, wherein a reducer is provided that is adapted to be inserted into said receptacle (96), which reducer in turn is adapted to be inserted into a centrifuge vessel.

8. Apparatus according to any one of the preceding claims, wherein said receptacle (96) is of a cage-shaped design and has recesses (30, 46, 84) made therein, in particular in the circumferential direction.

9. Method of operating an apparatus according to any one of the preceding claims, wherein sample parameters are measured, and the speed of rotation is adjusted as a function of said sample parameters.

10. Method according to claim 9, wherein the sample parameter measured is viscosity and/or temperature.

## Revendications

1. Dispositif d'homogénéisation et de séparation de milieux (10) comprenant une centrifugeuse (40, 70) qui présente un rotor de centrifugeuse (14, 44, 74) rotatif autour d'un axe de moteur (A) d'un moteur de centrifugeuse (12, 42, 72) ayant un corps de rotor, auquel au moins une unité de rotation (16, 48, 80) est reliée de telle sorte que celle-ci est conçue rotative en plus autour d'un axe de rotation de l'unité de rotation différent de l'axe de moteur (A), et celle-ci peut être entraînée par le biais d'un entraînement d'unité de rotation, des moyens permettant de régler au moins deux vitesses de rotation différentes de l'unité de rotation (16, 48, 80) étant prévus, l'unité de rotation (16, 48, 80) étant en outre dotée d'une denture (18) dans la zone de sa périphérie, permettant d'entraîner l'unité de rotation (16, 48, 80), l'unité de rotation étant disposée dans une cavité fermée vers le bas dans le corps de rotor, l'entraînement de l'unité de rotation comprenant une denture qui est en liaison avec le moteur de centrifugeuse, la denture de l'entraînement de l'unité de rotation, en tant que couronne dentée centrale, étant reliée de manière solidaire en rotation avec un carter moteur du moteur de centrifugeuse, et la couronne dentée étant placée entre le carter moteur (20) et le rotor de centrifugeuse.

2. Dispositif selon la revendication 1, dans lequel l'entraînement de l'unité de rotation est conçu de telle sorte que deux roues dentées de transmission qui sont conçues sous forme de paire de roues dentées (52) sont prévues, une première roue dentée de transmission (54) étant en prise avec la couronne dentée centrale (50) et la deuxième roue dentée de transmission (56) avec la denture de l'unité de rotation.

3. Dispositif selon la revendication 1 ou 2, dans lequel la couronne dentée centrale solidaire en rotation (50) peut être insérée au-dessus de l'axe de centrifugeuse (A) et peut être fixée sur le carter moteur de centrifugeuse (20).

4. Dispositif d'homogénéisation et de séparation de milieux (10) selon l'une des revendications précédentes, dans lequel un palier (24, 26) qui réside en dessous de la position du centre de gravité du récipient de la centrifugeuse pendant la centrifugation est prévu pour supporter l'unité de rotation.

5. Dispositif selon l'une des revendications précédentes, dans lequel l'unité de rotation (16, 48, 80) est conçue sous forme de disque rotatif.

6. Dispositif selon l'une des revendications précédentes, dans lequel l'unité de rotation (16, 48, 80) comprend un système de réception (96) dans lequel un produit de centrifugation ou un récipient de centrifugeuse contenant un produit de centrifugation peut être inséré.

7. Dispositif selon la revendication 5, dans lequel une réduction qui peut être insérée dans le système de réception (96) est prévue, un récipient de centrifugeuse pouvant être de nouveau inséré dans la réduction.

8. Dispositif selon l'une des revendications précédentes, dans lequel le système de réception (96) est conçu sous la forme d'une cage et présente des cavités (30, 46, 84), en particulier dans la direction de la circonférence.

9. Procédé de fonctionnement d'un dispositif selon l'une des revendications précédentes, dans lequel des paramètres d'échantillons sont mesurés et la vitesse de rotation est réglée en fonction des paramètres d'échantillons.

10. Procédé selon la revendication 9, dans lequel la viscosité et/ou la température sont mesurées comme paramètres d'échantillons.
